# EUROPEAN PATENT APPLICATION

(11) **EP 4 610 720 A1**
(43) Date of publication of application: **03.09.2025**
(21) Application number: 25159828.0
(22) Date of filing: 25.02.2025
(51) Int. Cl.: G02F 1/1337, E06B 9/24, G02F 1/1343, G02F 1/137, C09K 19/04

(54) **LIGHT CONTROL LAMINATE AND SMART WINDOW INCLUDING SAME**

(30) Priority: 28.02.2024 KR 20240028600
(71) Applicant: Dongwoo Fine-Chem Co., Ltd., Iksan-si, Jeollabuk-do 54631 (KR)
(72) Inventor: KIM, Sung-Min, 54631 Iksan-si (KR); RYU, Hyun-Sun, 54631 Iksan-si (KR); CHOI, Ju-Seob, 54631 Iksan-si (KR)
(74) Representative: Betten & Resch

(57) **Abstract**

The present disclosure relates to a light control laminate which has excellent adhesion between the liquid crystal and the conductive layer and does not fall off easily so that damage to the laminate can be prevented, which has good cell drivability even at low voltage when implementing the light-transmitting mode even if the liquid crystal layer contains a polymer, which enables normal white to be implemented when no voltage is applied, and which has a significantly reduced thickness and a simplified manufacturing process compared to the conventional light control laminate, a smart window including the same, and an automobile or building window to which the same is applied.

## Description

### [Technical Field]

The present disclosure relates to a light control laminate, a smart window including the same, and an automobile or building window to which the same is applied.

### [Background Art]

In general, there are many cases where external light blocking coatings are applied to the windows of means of transportation such as vehicles, etc. However, the windows of conventional means of transportation have fixed transmittance, and the external light blocking coatings also have fixed transmittance.

Therefore, the windows of such conventional means of transportation have fixed overall transmittance, which may cause accidents. For example, if the overall transmittance is set low, there is no problem during the day when ambient light is sufficient. However, there is a problem in that drivers and others may have difficulty properly checking the surroundings of the means of transportation at night when there is not enough light around. Alternatively, if the overall transmittance is set high, there is a problem in that drivers and others may be dazzled during the day when ambient light is insufficient. Accordingly, a light control laminate that can change the transmittance of light when voltage is applied has been developed.

The light control laminate is driven by varying the transmittance by driving the liquid crystal according to the voltage application, and the light control laminates developed to date are manufactured by forming a conductive layer for driving the liquid crystal on a separate substrate and then combining this with other elements such as a polarizing plate.

For example, Japanese Patent Publication No. 2018-010035 also discloses a light control laminate including a transparent electrode layer formed on a polycarbonate (PC) substrate having a predetermined thickness.

However, if a separate substrate is included to form a conductive layer in this way, there are problems in that the manufacturing cost increases as the manufacturing process becomes more complicated, the thickness of the laminate increases, and the transmittance changes due to the occurrence of a phase difference.

In addition, the liquid crystal compound constituting the liquid crystal does not have a reactive group, so it does not have adhesion with the conductive layer, and therefore, a sealant must be provided to bond the liquid crystal and the conductive layer, but if the sealant is not provided or is damaged, there is a problem in that the laminate is immediately torn off.

Furthermore, in the case of including a polymer such as polymer dispersed liquid crystal (PDLC) in the conventional liquid crystal layer, the liquid crystal compound exists in the polymer in a phase-separated droplet or capsule state, and the phase-separated droplet or capsule-shaped liquid crystal compounds are arranged in an irregular direction and cannot have a constant initial orientation, and in order to implement a light-blocking mode, it is necessary to maintain a state in which voltage is applied, which has the disadvantage of high power consumption.

Accordingly, there is a need for the development of a light control laminate that has excellent adhesion between the liquid crystal and the conductive layer regardless of whether there is a sealant or not, or the sealant is damaged or not, and may be sufficiently driven even at 10 to 30 V so that power consumption for implementing a light-transmitting mode is not large even if the light control laminate includes a polymer.

### [Related Art Document]

### [Patent Document]

(Patent Document 1) Japanese Patent Publication No. 2018-010035

### [Disclosure]

### [Technical Problem]

The present disclosure aims to provide a light control laminate that has excellent adhesion between a liquid crystal and a conductive layer and is not easily separated.

Further, the present disclosure aims to provide a light control laminate that has good cell drivability even at low voltage when implementing a light-transmitting mode and can implement normal white when no voltage is applied, even if a polymer is contained in the liquid crystal layer.

Further, the present disclosure aims to provide a light control laminate having a simplified manufacturing process by not including a separate substrate for forming a conductive layer and a separate alignment film for initial orientation of a liquid crystal compound.

Further, the present disclosure aims to provide a smart window including the light control laminate and an automobile or building window to which the same is applied.

However, the problems to be solved by the present disclosure are not limited to the problems mentioned above, and other problems not mentioned will be clearly understood by those skilled in the art from the description below.

### [Technical Solution]

The present disclosure relates to a light control laminate including: a first polarizing plate; a first transparent conductive layer formed on one surface of the first polarizing plate; a second polarizing plate facing the first polarizing plate; a second transparent conductive layer which is formed on one surface of the second polarizing plate and faces the first transparent conductive layer; and a liquid crystal layer provided between the first transparent conductive layer and the second transparent conductive layer, wherein the first transparent conductive layer and the second transparent conductive layer contain a conductive polymer, the liquid crystal layer is a cured product of a liquid crystal layer-forming composition including a polymerizable monomer and a liquid crystal compound, the polymerizable monomer includes one or more selected from a trifunctional aziridine-based monomer, a trifunctional isocyanate-based monomer, and an acrylate-based monomer, and the liquid crystal compound is arranged with a uniform initial orientation.

The polymerizable monomer may include one or more selected from a trifunctional aziridine-based monomer and a trifunctional isocyanate-based monomer, and an acrylate-based monomer.

The polymerizable monomer may be contained in an amount of 40% by weight or less with respect to the weight of the liquid crystal compound.

A liquid crystal behavior method of the liquid crystal layer may be one selected from the group consisting of a twisted nematic (TN) mode, a super twisted nematic (STN) mode, an in-plane switching (IPS) mode, a fringe-field switching (FFS) mode, an electrically controlled birefringence (ECB) mode, and a vertical alignment (VA) mode.

The liquid crystal behavior method of the liquid crystal layer may be a twisted nematic (TN) mode.

The first transparent conductive layer and the second transparent conductive layer may be ones in which a surface in contact with the liquid crystal layer is rubbing-aligned.

The conductive polymer may include one or more selected from the group consisting of polythiophene, poly(3,4-ethylenedioxythiophene), polyaniline, polyacetylene, polydiacetylene, polyphenylene, polyphenylenevinylene, polyphenylene sulfide, poly(thienylene vinylene), poly(thiophene vinylene), polyfluorene, polypyrrole, poly(3,4-ethylenedioxythiophene):polystyrene sulfonate, poly(3,4-ethylenedioxythiophene):camphorsulfonic acid, poly(3,4-ethylenedioxythiophene):toluenesulfonic acid, poly(3,4-ethylenedioxythiophene):dodecylbenzenesulfonic acid, polyaniline:polystyrenesulfonate, polyaniline:camphorsulfonic acid, polypyrrole:polystyrenesulfonate, polypyrrole:camphorsulfonic acid, polypyrrole:toluenesulfonic acid, polypyrrole:dodecylbenzenesulfonic acid, polythiophene:polystyrene sulfonate, polythiophene: camphorsulfonic acid, polythiophene: toluenesulfonic acid, and polythiophene:dodecylbenzenesulfonic acid.

At least one of the first transparent conductive layer and the second transparent conductive layer may be formed in direct contact without including a separate substrate between the first polarizing plate and/or the second polarizing plate.

At least one of the first transparent conductive layer and the second transparent conductive layer may be formed in direct contact by including a highly adhesive layer between the first polarizing plate and/or the second polarizing plate.

At least one of the first polarizing plate and the second polarizing plate may include one or more functional layers selected from the group consisting of a protective layer, a retardation matching layer, and a refractive index adjustment layer.

The first polarizing plate and the second polarizing plate may have a thickness of 30 to 200 µm.

The light control laminate may further include one or more selected from the group consisting of a pressure-sensitive adhesive/adhesive layer, an ultraviolet-absorbing layer, and a hard coating layer.

Furthermore, the present disclosure relates to a smart window including the light control laminate.

Furthermore, the present disclosure relates to an automobile in which the smart window is applied to at least one of a front window, a rear window, a side window, a sunroof window, and an interior partition.

Furthermore, the present disclosure relates to a building window including the smart window.

### [Advantageous Effects]

According to the light control laminate according to the present disclosure, since the adhesion between the liquid crystal and the conductive layer is excellent, the laminate is not easily separated, the laminate can be prevented from being damaged.

According to the light control laminate according to the present disclosure, even if the liquid crystal layer contains a polymer, the cell drivability is good at 10 to 30 V when implementing the light-transmitting mode, and good normal white can be implemented in a state where no voltage is applied.

In addition, according to the light control laminate according to the present disclosure, since the conductive layer containing the conductive polymer material can perform both the role of an electrode for driving the liquid crystal layer and the role of an alignment film, the thickness can be significantly reduced compared to the conventional light control laminate by not including a separate alignment film for the initial orientation of the liquid crystal compound.

In addition, according to the light control laminate according to the present disclosure, the process of forming a conductive layer on a substrate and bonding it with another member in order to form the conventional light control laminate can be omitted, so that the manufacturing process can be simplified compared to the conventional light control laminate.

In addition, according to the light control laminate according to the present disclosure, since the conductive layer is formed directly on one surface of the polarizing plate, a separate substrate for forming the conductive layer is not included, so that the thickness can be significantly reduced compared to the conventional light control laminate.

In addition, the present disclosure can provide a smart window including the light control laminate and an automobile or building window to which the same is applied.

### [Description of Drawings]

FIG. 1 is a drawing showing a laminated structure of a light control laminate according to one embodiment of the present disclosure.
FIGS. 2A to 2E are drawings showing laminated structures of polarizing plates according to one or more embodiments of the present disclosure.

### [Specific Details for Carrying Out the Invention]

The present disclosure relates to a light control laminate including: a first polarizing plate; a first transparent conductive layer formed on one surface of the first polarizing plate; a second polarizing plate facing the first polarizing plate; a second transparent conductive layer which is formed on one surface of the second polarizing plate and faces the first transparent conductive layer; and a liquid crystal layer provided between the first transparent conductive layer and the second transparent conductive layer, wherein the first transparent conductive layer and the second transparent conductive layer contain a conductive polymer, the liquid crystal layer is a cured product of a liquid crystal layer-forming composition including a polymerizable monomer and a liquid crystal compound, the polymerizable monomer includes one or more of a trifunctional aziridine-based monomer, a trifunctional isocyanate-based monomer, and an acrylate-based monomer, and the liquid crystal compound is arranged with a uniform initial orientation.

The light control laminate of the present disclosure is particularly suitable for a technical field capable of changing the light transmittance according to the application of voltage, and may be used, for example, in a smart window, etc.

A smart window refers to an optical structure that controls the amount of light or heat that passes through by changing the light transmittance according to the application of an electrical signal. That is, a smart window is provided so that it may be changed into a transparent, opaque, or translucent state by voltage, and is also called a variable transmittance glass, a light control glass, a smart glass, or the like.

Smart windows may be used as partitions for partitioning of the interior space of vehicles and buildings or protecting privacy, or as skylights disposed in openings of buildings, and may also be used as highway signs, bulletin boards, scoreboards, clocks, or advertising screens, and can be used as replacements for glass in transportation means such as windows or sunroofs of automobiles, buses, aircraft, ships, or trains.

The light control laminate of the present disclosure can also be used as a smart window in various technical fields described above, but since the conductive layer is formed directly on the polarizing plate, it does not include a separate substrate for forming the conductive layer, so it is thin and advantageous in flexural characteristics, and even if a polymer material is contained in the conductive layer, it can be operated at low voltage, can implement good normal white when no voltage is applied, and has excellent adhesion, so it can be particularly suitably used as a smart window for vehicles or buildings. In one or more embodiments, a smart window to which the light control laminate of the present disclosure is applied may be used as a front window, a rear window, a side window, and a sunroof window of an automobile, or a window for a building, and in addition to the use for blocking external light, it may also be used for partitioning the internal space of an automobile or a building such as an internal partition, or for protecting privacy.

Hereinafter, with reference to the drawings, the embodiments of the present disclosure will be described in more detail. However, the following drawings attached to this specification illustrate preferred embodiments of the present disclosure, and serve to further understand the technical idea of the present disclosure together with the contents of the invention described above, so the present disclosure should not be interpreted as being limited to matters described in such drawings.

The terms used in this specification are for the purpose of describing embodiments and are not intended to limit the present disclosure. In this specification, the singular also includes the plural unless specifically stated in the phrase. For example, "polarizing plate" used in this specification may mean at least one polarizing plate in the first polarizing plate and the second polarizing plate, and "transparent conductive layer" may mean at least one transparent conductive layer in the first transparent conductive layer and the second transparent conductive layer.

The terms "comprises" and/or "comprising" used in this specification are used in the sense that they do not exclude the presence or addition of one or more other components, steps, operations, and/or elements other than the mentioned components, steps, operations, and/or elements. Throughout the specification, the same reference numerals refer to the same components.

The spatially relative terms "below", "bottom surface", "lower part", "above", "top surface", and "upper part" may be used to easily describe the correlation between one element or component and another element or component as illustrated in the drawings. The spatially relative terms should be understood as terms that include different directions of the elements when used or operated in addition to the directions illustrated in the drawings. For example, when an element illustrated in the drawings is flipped, an element described as "below" or "lower part" of another element may be put "above" the other element. Accordingly, the exemplary term "below" may include both the directions below and above. The elements may also be oriented in other directions, and thus the spatially relative terms may be interpreted according to the orientation.

The "plane direction" used in this specification may be interpreted as the direction orthogonal to the polarizing plate and/or the transparent conductive layer, i.e., the direction of the user's view.

### <Light control laminate>

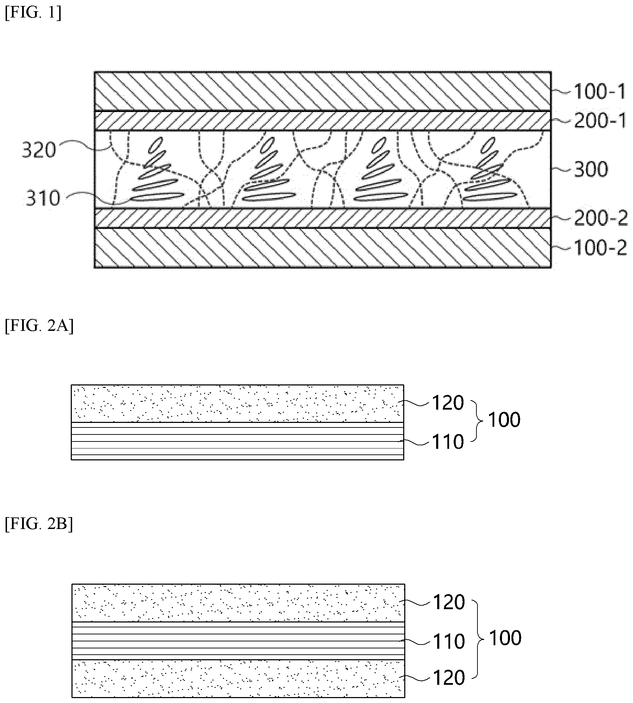

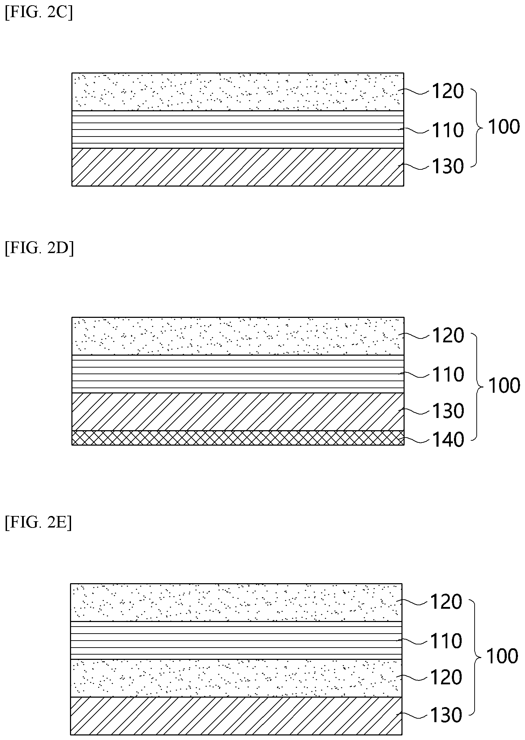

FIG. 1 is a drawing showing a laminated structure of a light control laminate according to one embodiment of the present disclosure, and FIG. 2 is drawings showing laminated structures of polarizing plates according to one or more embodiments of the present disclosure.

Referring to FIG. 1, a light control laminate according to one embodiment of the present disclosure may include a first polarizing plate 100-1, a second polarizing plate 100-2, a first transparent conductive layer 200-1, a second transparent conductive layer 200-2, and a liquid crystal layer 300, and the liquid crystal layer 300 may contain a liquid crystal compound 310 and a polymer network 320.

Referring to FIG. 2, the polarizing plate 100 includes a polarizer 110, and may further include a functional layer, such as a protective layer 120, a retardation matching layer 130, a refractive index adjustment layer 140 or the like, on one or both surfaces of the polarizer 110.

For example, the polarizing plate 100 may include a polarizer 110 and a protective layer 120 laminated on one or both surfaces of the polarizer 110 (see FIGS. 2A and 2B), may include a polarizer 110, a protective layer 120 laminated on one surface of the polarizer 110, and a retardation matching layer 130 laminated on the other surface opposite to the one surface of the polarizer 110 (see FIG. 2C), may include a polarizer 110, a protective layer 120 laminated on one surface of the polarizer, and a retardation matching layer 130 and a refractive index adjustment layer 140 sequentially laminated on the other surface opposite to the one surface of the polarizer 110 (see FIG. 2D), and may include a polarizer 110, a protective layer 120 laminated on one surface of the polarizer, and a protective layer 120 and a retardation matching layer 130 sequentially laminated on the other surface opposite to the one surface of the polarizer 110 (see FIG. 2E).

The polarizer 110 may use a conventional or later-developed polarizer, and for example, a stretchable polarizer, a coated polarizer, or the like may be used.

In one embodiment, the stretchable polarizer may include a stretched polyvinyl alcohol (PVA) based resin. The polyvinyl alcohol (PVA) based resin may be a polyvinyl alcohol-based resin obtained by saponifying a polyvinyl acetate-based resin. Examples of the polyvinyl acetate-based resin may include copolymers of vinyl acetate and other monomers copolymerizable therewith, etc. in addition to polyvinyl acetate, which is a homopolymer of vinyl acetate. The other monomers may include unsaturated carboxylic acid-based monomers, unsaturated sulfonic acid-based monomers, olefin-based monomers, vinyl ether-based monomers, and acrylamide-based monomers having an ammonium group. In addition, the polyvinyl alcohol (PVA) based resin may include a modified one, and may be, for example, polyvinyl formal or polyvinyl acetal modified with aldehydes.

In one embodiment, the coated polarizer may be formed by a liquid crystal coating composition, wherein the liquid crystal coating composition may include a reactive liquid crystal compound, a dichroic dye, etc.

The reactive liquid crystal compound may refer to a compound that includes, for example, a mesogen skeleton, etc., and also includes one or more polymerizable functional groups. Such reactive liquid crystal compounds are known in various ways under the name of so-called reactive mesogen (RM). The reactive liquid crystal compound may form a cured film in which a polymer network is formed while maintaining liquid crystal arrangement by being polymerized by light or heat.

The reactive liquid crystal compound may be a monofunctional or polyfunctional reactive liquid crystal compound. The monofunctional reactive liquid crystal compound is a compound having one polymerizable functional group, and the polyfunctional reactive liquid crystal compound may refer to a compound having two or more polymerizable functional groups.

The dichroic dye is a component that is included in a liquid crystal coating composition to impart polarization characteristics, and has properties in which the absorbance in the long-axis direction of the molecule and the absorbance in the short-axis direction are different. The dichroic dye may use a dichroic dye that has been developed in the past or will be developed in the future, and may include, for example, one or more selected from the group consisting of azo dyes, anthraquinone dyes, perylene dyes, merocyanine dyes, azomethine dyes, phthaloperylene dyes, indigo dyes, dioxadine dyes, polythiophene dyes, and phenoxazine dyes.

The liquid crystal coating composition may further include a solvent capable of dissolving the reactive liquid crystal compound and the dichroic dye, and for example, propylene glycol monomethyl ether acetate (PGMEA), methyl ethyl ketone (MEK), xylene, chloroform, etc. may be used. In addition, the liquid crystal coating composition may further include a leveling agent, a polymerization initiator, etc. within a range that does not impair the polarization characteristics of the coating film.

The protective layer 120 is intended to preserve the polarization characteristics of the polarizer 110 from a post-process and an external environment, and may be implemented in the form of a protective film, etc.

The protective layer 120 may be formed in direct contact with one or both surfaces of the polarizer 110 as shown in FIGS. 2A and 2B, but is not limited thereto. For example, the protective layer may be used as a multilayer structure in which one or more protective layers are continuously laminated, and may be formed in direct contact with another functional layer.

In one or more embodiments, the protective layer 120 may contain one or more selected from the group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and cyclic olefin polymer (COP).

The retardation matching layer 130 is intended to complement the optical characteristics of the light control laminate, and may be implemented in the form of a phase difference film, etc., and may use a phase difference film, etc. that have been developed in the past or will be developed later. For example, a quarter-wave plate (1/4 wave plate) or a half-wave plate (1/2 wave plate) for delaying the phase of light may be used, and these may be used alone or in combination.

The retardation matching layer 130 may be formed in direct contact with one surface of the polarizer 110 as shown in FIGS. 2C and 2D, but is not limited thereto. For example, as shown in FIG. 2E, the retardation matching layer 130 is formed on one surface of the protective layer 120 so that the polarizer 110, the protective layer 120, and the retardation matching layer 130 may be sequentially laminated.

The retardation matching layer 130 may use a polymer stretched film or a liquid crystal polymerization film in which a polymer film capable of imparting optical anisotropy by stretching is stretched in an appropriate manner.

In one embodiment, the polymer stretched film may use a polymer layer including a polyolefin such as polyethylene (PE) or polypropylene (PP), a cycloolefin polymer (COP) such as polynorbornene, a polyester such as polyvinyl chloride (PVC), polyacrylonitrile (PAN), polysulfone (PSU), an acrylic resin, polycarbonate (PC), or polyethylene terephthalate (PET), a cellulose ester-based polymer such as polyacrylate, polyvinyl alcohol (PVA), or triacetyl cellulose (TAC), or a copolymer of two or more monomers among the monomers forming the polymer.

The method for obtaining the polymer stretched film is not particularly limited, and for example, the polymer stretched film may be obtained by forming the polymer material into a film form and then stretching it. The method for forming the polymer material into a film form is not particularly limited, and it is possible to form the polymer material into a film by known methods such as injection molding, sheet molding, blow molding, injection blow molding, inflation molding, extrusion molding, foam molding, and cast molding, and secondary processing molding methods such as pressure molding and vacuum molding may also be used. Among them, extrusion molding and cast molding are preferably used. At this time, for example, an extruder or the like having a T-die, a circular die, etc. mounted thereon may be used to perform extrusion molding of an unstretched film. When obtaining a molded product by extrusion molding, a material in which various resin components, additives, etc. are melt-mixed in advance may be used or the unstretched film may also be molded through melt-mixing during extrusion molding. In addition, a solvent common to various resin components, for example, a solvent such as chloroform, methylene dichloride, or the like may be used to dissolve various resin components, and then cast and dry-solidified, thereby cast-forming an unstretched film.

The polymer stretched film may be provided by performing uniaxial stretching on the formed film in a mechanical direction (MD, longitudinal or lengthwise direction), and by performing uniaxial stretching in a transverse direction (TD, or widthwise direction) perpendicular to the MD. Alternatively, a biaxially stretched film may be manufactured by performing stretching by a sequential biaxial stretching method of roll stretching and tenter stretching, a simultaneous biaxial stretching method by tenter stretching, a biaxial stretching method by tubular stretching, etc. to enable a biaxially stretched film to be manufactured.

The liquid crystal polymerization film may include a reactive liquid crystal compound in a polymerized state. The above description of the reactive liquid crystal compound of the coated polarizer may be equally applied to the reactive liquid crystal compound.

In one or more embodiments, the thickness of the retardation matching layer 130 may be 10 to 100 µm in the case of a polymer stretched film, and 0.1 to 5 µm in the case of a liquid crystal polymerization film.

The refractive index adjustment layer 140 may be provided to compensate for the refractive index difference of the light control laminate due to the transparent conductive layer 200, and may play a role in improving visibility characteristics, etc. by reducing the refractive index difference. In addition, the refractive index adjustment layer 140 may be provided to correct the color caused by the transparent conductive layer 200. Meanwhile, when the transparent conductive layer has a pattern, the difference in transmittance between the pattern area where the pattern is formed and the non-pattern area where the pattern is not formed may be compensated for through the refractive index adjustment layer 140.

Specifically, the transparent conductive layer 200 is laminated adjacent to another member (e.g., polarizer 110, etc.) having a refractive index different from that of the transparent conductive layer 200, and the difference in the light transmittance may be caused due to the difference in the refractive index with the adjacent other layer, and in particular, when a pattern is formed in the transparent conductive layer, there may occur a problem in which the pattern area and the non-pattern area are visible so that they can be distinguished. Therefore, the refractive index adjustment layer 140 may be included to compensate for the refractive index, thereby reducing the difference in the light transmittance of the light control laminate, and in particular, when a pattern is formed in the transparent conductive layer, the pattern area and non-pattern area are separated and not visible.

In one embodiment, the refractive index of the refractive index adjustment layer 140 may be appropriately selected depending on the material of the adjacent other member, but may be preferably 1.4 to 2.6, and more preferably, 1.4 to 2.4. In this case, it is possible to prevent light loss due to a sharp difference in refractive index between other members such as the polarizer 110, etc. and the transparent conductive layer 200.

The refractive index adjustment layer 140 is not particularly limited as long as it can prevent a sharp difference in refractive index between other members such as the polarizer 110 and the transparent conductive layer 200, and a compound used in the formation of a conventional or later-developed refractive index adjustment layer may be used, and for example, it may be formed from a composition for forming a refractive index adjustment layer that contains a polymerizable isocyanurate compound.

In one embodiment, the polarizing plate 100 may further include other functional layers for assisting or reinforcing the characteristics of the polarizer in addition to the functional layers described above, and may further include, for example, an overcoat layer, etc. in order to further improve mechanical durability.

The thickness of each functional layer other than the retardation matching layer 130 may be 1 to 30 µm, and more preferably 2 to 20 µm. The thickness may refer to the thickness after drying, and when each thickness satisfies the above range, the functions of each functional layer may be performed without any problems while enabling thinning.

In one or more embodiments of the present disclosure, the polarizing plate 100 may have a thickness of 30 to 200 µm, preferably 30 to 170 µm, and more preferably 50 to 150 µm. In this case, the polarizing plate 100 can prevent lifting when bonded to glass for application to a smart window while maintaining optical characteristics, and can prevent the thickness of the smart window from increasing.

The transparent conductive layer 200 is provided for driving the liquid crystal layer 300 and may be formed in direct contact with the polarizing plate 100.

For example, as shown in FIG. 1, the first transparent conductive layer 200-1 may be formed in direct contact with the first polarizing plate 100-1, and the second transparent conductive layer 200-2 may be formed in direct contact with the second polarizing plate 100-2.

Conventionally, a light control laminate used in the manufacture of smart windows, etc., was manufactured by forming a conductive layer for driving a liquid crystal on one surface of a substrate and bonding the other surface of the substrate with a polarizing plate. However, the light control laminate according to the present disclosure is characterized in that it improves the transmittance and flexural characteristics in the light-transmitting mode while reducing the thickness of the laminate by directly forming a conductive layer on one surface of a polarizing plate without including a portion of a separate substrate for forming a conductive layer.

In one embodiment, the first transparent conductive layer 200-1 and/or the second transparent conductive layer 200-2 formed in direct contact with at least one polarizing plate of the first polarizing plate 100-1 and the second polarizing plate 100-2 means that it is formed on the polarizing plate by sharing a contact surface with the first polarizing plate 100-1 and/or the second polarizing plate 100-2 without including a separate substrate. For example, the first transparent conductive layer 200-1 and/or the second transparent conductive layer 200-2 may be formed by being deposited on the upper surface of a coating layer formed on the first polarizing plate 100-1 and/or the second polarizing plate 100-2. At this time, the first transparent conductive layer (200-1) and/or the second transparent conductive layer (200-2) may be formed in direct contact with the surface of the polarizing plate on which pretreatment has been performed after performing pretreatment such as corona treatment or plasma treatment on one surface of the polarizing plate in order to improve adhesive force with at least one polarizing plate of the first polarizing plate 100-1 and the second polarizing plate 100-2. The pretreatment is not limited to corona treatment or plasma treatment, and any pretreatment process that is developed conventionally or later may be used within a scope that does not hinder the purpose of the present disclosure.

In another embodiment of the present disclosure, the first transparent conductive layer 200-1 and/or the second transparent conductive layer 200-2 formed in direct contact with at least one polarizing plate of the first polarizing plate 100-1 and the second polarizing plate 100-2 may be formed in direct contact with the polarizing plate with an highly adhesive layer as a primer layer (not shown in the drawing) provided on one surface of the polarizing plate being interposed therebetween in order to improve adhesive force with the polarizing plate. The highly adhesive layer may use a pressure sensitive adhesive that is developed conventionally or later, and in one or more embodiments, an acrylic pressure sensitive adhesive, a rubber-based pressure sensitive adhesive, a silicone-based pressure sensitive adhesive, a urethane-based pressure sensitive adhesive, a polyvinyl alcohol-based pressure sensitive adhesive, a polyvinyl pyrrolidone-based pressure sensitive adhesive, a polyacrylamide-based pressure sensitive adhesive, a cellulose-based pressure sensitive adhesive, a vinyl alkyl ether-based pressure sensitive adhesive, etc. may be used. The pressure sensitive adhesive is not particularly limited as long as it has pressure-sensitive adhesive force and viscoelasticity, but in terms of ease of acquisition, etc., it may be preferably an acrylic pressure sensitive adhesive, and it may include, for example, a (meth)acrylate copolymer, a crosslinking agent, a solvent, etc.

In the light control laminate of the present disclosure, the first transparent conductive layer 200-1 and the second transparent conductive layer 200-2 contain a conductive polymer, and may preferably have a transmittance for visible light of 50% or more. In this case, even if deformation is applied to the transparent conductive layer due to external stress, cracks can be prevented from occurring in the transparent conductive layer, and further, the surface resistance can be prevented from increasing excessively.

In one embodiment, the transparent conductive layer 200 may have a thickness of 1 µm or less, preferably 10 nm to 500 nm, and more preferably 30 nm to 200 nm. In this case, the transparent conductive layer 200 secures a predetermined transmittance, does not significantly change in characteristics due to external stress, and enables the manufacture of a small-thickness light control laminate.

In one embodiment, the first transparent conductive layer 200-1 and the second transparent conductive layer 200-2 may have a surface in contact with the liquid crystal layer 300 that is oriented in a rubbing manner. Unlike a transparent conductive layer including a metal component, the conductive polymer contained in the transparent conductive layer 200 of the present disclosure may form a certain groove on the surface, and thus, the liquid crystal compound in the liquid crystal layer may be aligned in desired position and direction. In this case, the transparent conductive layer 200 may act as an electrode for driving the liquid crystal layer and also act as an alignment film, and since it does not include a separate alignment film, it is possible to manufacture a thinner light control laminate, and the manufacturing process may also be simplified.

In order to provide the rubbing-aligned transparent conductive layer 200, a rubbing method using a rubbing process and a photo-alignment method using ultraviolet rays may be used, and since the photo-alignment method generally has a weaker surface anchoring energy than the rubbing method, it is preferable that the transparent conductive layer 200 of the present disclosure has a surface that comes into contact with the liquid crystal layer 300 rubbing-aligned by the rubbing method.

The conductive polymer may use a conventional or later-developed conductive polymer material, and the conductive polymer may include, for example, one or more selected from the group consisting of polythiophene, poly(3,4-ethylenedioxythiophene), polyaniline, polyacetylene, polydiacetylene, polyphenylene, polyphenylenevinylene, polyphenylene sulfide, polythienylenevinylene, polythiophenevinylene, polyfluorene, polypyrrole, poly(3,4-ethylenedioxythiophene):polystyrenesulfonate, poly(3,4-ethylenedioxythiophene):camphorsulfonic acid, poly(3,4-ethylenedioxythiophene):toluenesulfonic acid, poly(3,4-ethylenedioxythiophene):dodecylbenzenesulfonic acid, polyaniline:polystyrenesulfonate, polyaniline:camphorsulfonic acid, polypyrrole:polystyrenesulfonate, polypyrrole:camphorsulfonic acid, polypyrrole:toluenesulfonic acid, polypyrrole:dodecylbenzenesulfonic acid, polythiophene:polystyrenesulfonate, polythiophene:camphorsulfonic acid, polythiophene:toluenesulfonic acid, and polythiophene:dodecylbenzenesulfonic acid, and preferably, it may be poly(3,4-ethylenedioxythiophene).

The transparent conductive layer 200 may be formed by a method commonly used in the relevant field, and may be formed by selecting, for example, an appropriate process from the methods including: a coating process such as a spin coating method, a roller coating method, a bar coating method, a dip coating method, a gravure coating method, a curtain coating method, a die coating method, a spray coating method, a doctor coating method, a kneader coating method, or the like; a printing process such as a screen printing method, a spray printing method, an inkjet printing method, a flexographic printing method, an intaglio printing method, a lithographic printing method or the like; etc.

When the transparent conductive layer 200 of the present disclosure is not rubbing-aligned, an alignment film may be provided between the transparent conductive layer 200 and the liquid crystal layer 300, and the alignment film is for adding orientation properties to the liquid crystal compound 310, and is preferably photo-aligned. The alignment film may be manufactured by applying and curing an alignment film coating composition including an alignment polymer, a photopolymerization initiator, and a solvent. The alignment polymer is not particularly limited, but may use a polyacrylate-based resin, a polyamic acid resin, a polyimide-based resin, a polymer containing a cinnamate group, etc., and a conventional or later-developed polymer capable of showing orientation properties may be used.

The liquid crystal layer 300 included in the light control laminate of the present disclosure may change the driving mode of the light control laminate to a light-transmitting mode or a light-blocking mode by adjusting the transmittance of light incident from one or a plurality of directions according to the electric field generated by the transparent conductive layer 200.

The liquid crystal layer 300 may include a cured product of a liquid crystal layer-forming composition including a polymerizable monomer and a liquid crystal compound 310, and may be positioned, for example, in a space provided between the first transparent conductive layer 200-1 and the second transparent conductive layer 200-2 in the light control area.

The method for forming the liquid crystal layer 300 using the liquid crystal layer-forming composition is not particularly limited, and for example, the liquid crystal layer 300 may be formed by applying the liquid crystal layer-forming composition onto a transparent conductive layer having a rubbing-aligned surface, and photocuring or thermally curing the same.

The liquid crystal compound 310 is not particularly limited as long as it is driven by an electric field and can control the light transmittance, and a conventional or later-developed liquid crystal compound may be used, and for example, the contents regarding the reactive liquid crystal compound of the above-described coated polarizer may be applied equally.

The liquid crystal compound may include a chiral nematic (cholesteric) liquid crystal compound, and the chiral nematic liquid crystal compound may include a nematic liquid crystal compound and a chiral compound.

The nematic liquid crystal compound has long rod-shaped molecules arranged parallel to each other, and although there is no regularity in the central position of the molecules, it has an order in the direction of the molecular axis. Since each molecule of the nematic liquid crystal compound may move freely in the long axis direction, the viscosity is small and the fluidity is good, and since the direction of each molecule is almost equal up and down, the polarization is canceled so that the nematic liquid crystal compound generally does not exhibit ferroelectricity. The type of the nematic liquid crystal compound is not particularly limited, and as long as any nematic liquid crystal compound including a mesogenic group may be used without limitation.

Chiral compounds are compounds whose three-dimensional structures are symmetrical to each other like the relationship between the left and right hands, and although they have the same chemical structure and physical properties, they have different three-dimensional structures because they are mirror images of each other. When a certain amount of a chiral compound is included in the nematic liquid crystal compound, it may induce a spiral period. The type of the chiral compound may be used without being particularly limited as long as it does not damage the liquid crystal properties of the liquid crystal compound, for example, nematic regularity, and may induce a desired spiral period.

The chiral compound for inducing a spiral period in the liquid crystal compound is necessary to at least include chirality in its molecular structure. As the chiral compound, for example, a compound having one or more asymmetric carbons, a compound having an asymmetric point on a heteroatom such as a chiral amine, chiral sulfoxide or the like, or a compound having an axially asymmetric, optically active site, such as cumulene or binaphthol may be exemplified.

The chiral compound may be, for example, a low molecular weight compound having a molecular weight of 1,500 or less. For example, as the chiral compound, a commercially available chiral nematic liquid crystal, for example, a chiral dopant liquid crystal S-811 commercially available from Merck, Paliocolor LC 756 (prepared by BASF), or the like may be used, but is not limited thereto.

The chiral nematic liquid crystal compound may include 75 to 99% by weight of the nematic liquid crystal compound and 1 to 25% by weight of the chiral compound with respect to the total weight of the chiral nematic liquid crystal compound, but is not limited thereto. The contents of the nematic liquid crystal compound and the chiral compound may be appropriately adjusted within the above range to adjust the spiral period, i.e., the pitch, of the chiral nematic liquid crystal compound. The pitch of the chiral nematic liquid crystal compound is not particularly limited, but may be 5 to 20 µm.

The liquid crystal behavior method of the liquid crystal layer 300 is not particularly limited, and for example, a twisted nematic (TN) mode, a super twisted nematic (STN) mode, an in-plane switching (IPS) mode, a fringe-field switching (FFS) mode, an electrically controlled birefringence (ECB) mode, and a vertical alignment (VA) mode may be used, and preferably a twisted nematic (TN) mode may be used.

The polymerizable monomer included in the liquid crystal layer-forming composition of the present disclosure refers to a compound that forms a polymer network described later by a photopolymerization reaction or a thermal polymerization reaction, and may include one or more selected from a trifunctional aziridine-based monomer, a trifunctional isocyanate-based monomer, and an acrylate-based monomer. The polymerizable monomer may secure the formation of a polymer network and adhesion to a transparent conductive layer by including them.

In particular, since the trifunctional polymerizable monomer contains a polyfunctional group, it can densely form a three-dimensional polymer network within the liquid crystal layer, which is preferable for maintaining the initially designed cell gap, and from the perspective of the polymer network, it can form a random but uniform network over the entire area. In addition, the trifunctional isocyanate-based monomer and the trifunctional aziridine-based monomer can dramatically improve adhesion by reacting and bonding with hydroxyl groups, etc. distributed in the transparent conductive layer. Monofunctional or difunctional aziridine-based monomers or isocyanate-based monomers have too few functional groups to be connected to the network within the liquid crystal layer and the bonding with hydroxyl groups of the transparent conductive layer, and thus the improvement in adhesion is insufficient.

The acrylate-based monomer undergoes curing reaction first by UV curing prior to isocyanate-based and aziridine-based monomers, which are relatively slow heat-curing monomers, thereby helping to improve processability and handling when input between various processes after the bonding process.

Polymerizable monomers capable of performing photopolymerization reaction among the polymerizable monomers may include acrylate-based monomers, and may include, for example, one or more selected from the group consisting of n-butyl acrylate, t-butyl acrylate, sec-butyl acrylate, pentyl acrylate, 2-ethylbutyl acrylate, 2-ethylhexyl acrylate, 2-ethylhexyl diglycol acrylate, n-octyl acrylate, isooctyl acrylate, isononyl acrylate, lauryl acrylate and tetradecyl acrylate, 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 2-hydroxyethylene glycol (meth)acrylate and 2-hydroxypropylene glycol (meth)acrylate, (meth)acrylic acid, 2-(meth)acryloyloxyacetic acid, 3-(meth)acryloyloxypropyl acid, 4-(meth)acryloyloxybutyric acid, isobornyl acrylate, caprolactone acrylate, triethylene glycol diacrylate, trimethylolpropane triacrylate, pentaerythritol triacrylate, and dipentaerythritol pentaacrylate.

Polymerizable monomers capable of performing a thermal polymerization reaction among the polymerizable monomers may include a trifunctional isocyanate-based monomer and a trifunctional aziridine-based monomer.

The trifunctional group monomer has the advantage of not impacting the liquid crystal, having excellent compatibility with the liquid crystal, and being able to exhibit appropriate phase separation with the liquid crystal.

The trifunctional aziridine-based monomer may include, for example, one or more selected from the group consisting of pentaerythritol-tris-(β-(N-aziridinyl))propionate, trimethylolpropane-tris(β-N-aziridinyl)propionate, trimethylolpropane tris(2-methyl-1-aziridinepropionate), triethylene melamine, and tri-1-aziridinylphosphineoxide.

The trifunctional isocyanate-based monomer may be, for example, an isocyanate addition polymer or an isocyanurate polymer, or a biuret, and may include triphenylmethane triisocyanate, methylenebis triisocyanate, etc. In terms of compatibility with a liquid crystal, a trifunctional polymer of the hexamethylene diisocyanate series that exists in a liquid state at room temperature is preferable.

The liquid crystal layer 300 of the present disclosure may contain a polymer network 320 and a liquid crystal compound 310 referring to FIG. 1, and the liquid crystal compound 310 is arranged with a uniform initial orientation. The liquid crystal layer 300 of the present disclosure includes a polymer network 320, but the liquid crystal compound 310 included together therein does not phase separate in the form of droplets or capsules, but exists in a form mixed with the polymer network 320, and may be arranged with a uniform initial orientation within the liquid crystal layer, so that the liquid crystal layer 300 may implement a light transmitting mode and a light blocking mode by adjusting the transmittance of light incident from one or a plurality of directions according to the electric field generated by the transparent conductive layer 200. Therefore, the liquid crystal layer 300 may exhibit a superior light blocking rate compared to conventional polymer dispersed liquid crystals that implement a light blocking mode by scattering incident light. In addition, the light control laminate of the present disclosure may implement a light-transmitting mode in a state that voltage is not applied by appropriately adjusting the transmission axis of the polarizing plate 100 and the optical axis of the liquid crystal layer 300, and in addition, since power consumption may be reduced compared to conventional polymer dispersed liquid crystals in that the application voltage required in driving is low compared to conventional polymer dispersed liquid crystals in which liquid crystals are arranged in a disorderly manner, there is an advantage in that sufficient driving is possible even at 10 to 30 V when implementing the light-transmitting mode. In addition, since the liquid crystals are not arranged in a disorderly manner, good normal white may be implemented in a state in which no voltage is applied.

In addition, the polymer network 320 may be formed through a crosslinking reaction of the polymerizable monomer. In order to maintain a uniform initial orientation of the liquid crystal compound 310 in the liquid crystal layer when forming the polymer network, it is preferable to use an alignment film having strong surface anchoring energy. To this end, the surface of the transparent conductive layer 200 in contact with the liquid crystal layer 300 as described above may be rubbing-aligned, or the surface of the alignment film in contact with the liquid crystal layer may be photoaligned.

In the conventional light control laminate, a sealant and a spacer necessarily need to be included in order to maintain a certain space, i.e., a cell gap, in which the liquid crystal compound is provided in the liquid crystal layer. However, when including a column spacer in the liquid crystal layer to maintain the cell gap, the manufacturing cost increases as the manufacturing process becomes complicated, and there is a problem in that the transmittance changes as the alignment film is damaged in the process of forming the spacer by irradiating the photoresist with ultraviolet rays. In addition, when a ball spacer is used to maintain the cell gap of the liquid crystal layer, there are problems such as difficulty in maintaining a constant optical color within the plane due to the inability to maintain a solid cell gap, and occurrence of current short circuit of the light control laminate. In addition, when a sealant is used to maintain the cell gap of the liquid crystal layer, there are problems such as deterioration of the appearance quality due to visibility of the sealant, defects in the sealant bursting during handling of the light control laminate, or occurrence of defects due to a difference in thickness with the spacer included together.

The liquid crystal layer 300 included in the light control laminate of the present disclosure contains a polymer network 320 together with a liquid crystal compound 310, so that the cell gap of the liquid crystal layer may be appropriately maintained without including a separate sealant and/or spacer. In addition, since the cell gap is maintained with the configuration of a polymer network alone rather than a combination of a sealant and a spacer, there is an advantage in that defects due to a difference in the thickness between the sealant and the spacer may be fundamentally blocked.

In addition, since the liquid crystal layer-forming composition of the present disclosure includes the polymerizable monomer, the degree of curing of the polymer network is sufficient and the adhesion to the transparent conductive layer is excellent, so that even without including a separate sealant, there may be no concern about separation of the liquid crystal layer and the conductive layer, thereby preventing damage.

The polymerizable monomer may be contained in an amount of 40% by weight or less, preferably 10% by weight to 40% by weight, with respect to the weight of the liquid crystal compound 310. When the polymerizable monomer is contained in the above content range, the compatibility with the liquid crystal is excellent, the field of view is not reduced in a state where no voltage is applied, and the orientation alignment of the TN liquid crystal resulting from the alignment film is not significantly affected, so that the driving performance is excellent even at low voltage. In addition, the degree of curing of the polymer network formed from the polymerizable monomer is sufficient and the adhesion is excellent, so that the liquid crystal may be driven stably.

Separately from the point that the light control laminate according to the present disclosure may maintain a stable cell gap even without including a sealant and a spacer by including a polymer network 320 in the liquid crystal layer 300, if necessary, the light control laminate may further include one or more of a sealant and a spacer within a range that does not impair the purpose of the present disclosure.

The sealant may include a curable resin as a base resin. As the base resin, an ultraviolet-curable resin or a thermosetting resin known in the art as one that may be usable for a sealant in the art may be used. The ultraviolet-curable resin may be a polymer of an ultraviolet-curable monomer. The thermosetting resin may be a polymer of a thermosetting monomer.

For example, an acrylate-based resin, an epoxy-based resin, a urethane-based resin, a phenol-based resin, or mixtures of the resins may be used as the base resin of the sealant. In one embodiment, the base resin may be an acrylate-based resin, and the acrylate-based resin may be a polymer of an acrylic monomer. The acrylic monomer may be, for example, a polyfunctional acrylate. In another embodiment, the sealant may further include a monomer component in the base resin. The monomer component may be, for example, a monofunctional acrylate. In the present specification, a monofunctional acrylate may mean a compound having one acrylic group, and a polyfunctional acrylate may mean a compound having two or more acrylic groups. The curable resin may be cured by irradiation with ultraviolet rays and/or heating. The ultraviolet irradiation conditions or heating conditions may be appropriately selected within a range that does not impair the purpose of the present application. The sealant may further include an initiator, for example, a photoinitiator or a thermal initiator, if necessary.

The sealant may be formed by a method commonly used in the art, and may be formed, for example, by drawing the sealant onto the outer surface (i.e., the inactive area) of the liquid crystal layer using a dispenser having a nozzle.

The spacer may include at least one spacer of a ball spacer and a column spacer, and particularly preferably is a ball spacer. The ball spacer may be one or more, and is preferably 1 to 10 µm in diameter. In addition, when viewed in a planar direction, the area occupied by the ball spacer in the liquid crystal layer 300 is preferably 0.01 to 10% with respect to the area of the liquid crystal layer 300 in terms of user visibility and transmittance improvement in a light-transmitting mode.

The light control laminate of the present disclosure may further include other members within a range that does not impair the purpose of the present disclosure, and may further include, for example, a pressure-sensitive adhesive/adhesive layer, an ultraviolet-absorbing layer, a hard coating layer, etc.

The pressure-sensitive adhesive/adhesive layer may be formed using an adhesive or a pressure-sensitive adhesive, and it is preferable that the pressure-sensitive adhesive/adhesive layer has appropriate pressure-sensitive adhesive/adhesive force, and transparency and thermal stability at the same time so that peeling, bubbles, etc. do not occur when handling the light control laminate.

The adhesive may use a conventional or later-developed adhesive, and for example, a photocurable adhesive may be used.

The photocurable adhesive exhibits strong adhesive force by being crosslinked and cured by receiving active energy rays such as ultraviolet (UV) rays, electron beams (EB), etc., and may be composed of a reactive oligomer, a reactive monomer, a photopolymerization initiator, etc.

The reactive oligomer is an important component determining the characteristics of the adhesive, and forms a cured film by forming a polymer bond by a photopolymerization reaction. Usable reactive oligomers include polyester-based resins, polyether-based resins, polyurethane-based resins, epoxy-based resins, polyacrylic resins, silicone-based resins, etc.

The reactive monomers play a role of crosslinkers and diluents of the above-mentioned reactive oligomers and affect the adhesive properties. Usable reactive monomers may include monofunctional monomers, polyfunctional monomers, epoxy-based monomers, vinyl ethers, cyclic ethers, etc.

The photopolymerization initiator absorbs light energy to generate radicals or cations, thereby playing a role of initiating photopolymerization, and an appropriate one may be selected and used depending on the photopolymerization resin.

The pressure-sensitive adhesive may use a conventional or later-developed pressure-sensitive adhesive, and in one or more embodiments, an acrylic pressure-sensitive adhesive, a rubber-based pressure-sensitive adhesive, a silicone-based pressure-sensitive adhesive, a urethane-based pressure-sensitive adhesive, a polyvinyl alcohol-based pressure-sensitive adhesive, a polyvinyl pyrrolidone-based pressure-sensitive adhesive, a polyacrylamide-based pressure-sensitive adhesive, a cellulose-based pressure-sensitive adhesive, a vinyl alkyl ether-based pressure-sensitive adhesive, etc. may be used. The pressure-sensitive adhesive is not particularly limited as long as it has pressure-sensitive adhesive force and viscoelasticity, but in terms of ease of acquisition, etc., it may be preferably an acrylic pressure-sensitive adhesive, and it may include, for example, a (meth)acrylate copolymer, a crosslinking agent, a solvent, etc.

The crosslinking agent may use a conventional or later-developed crosslinking agent, and may include, for example, a polyisocyanate compound, an epoxy resin, a melamine resin, a urea resin, dialdehydes, a methylol polymer, etc., and preferably, a polyisocyanate compound.

The solvent may include a common solvent used in the field of resin compositions, and for example, solvents such as: alcohol-based compounds such as methanol, ethanol, isopropanol, butanol, propylene glycol methoxy alcohol, etc.; ketone-based compounds such as methyl ethyl ketone, methyl butyl ketone, methyl isobutyl ketone, diethyl ketone, dipropyl ketone, etc.; acetate-based compounds such as methyl acetate, ethyl acetate, butyl acetate, propylene glycol methoxy acetate, etc.; cellosolve-based compounds such as methyl cellosolve, ethyl cellosolve, propyl cellosolve, etc.; and hydrocarbon-based compounds such as hexane, heptane, benzene, toluene, xylene and etc. may be used. These may be used alone or in combination of two or more.

The thickness of the pressure-sensitive adhesive/adhesive layer may be appropriately determined depending on the type of resin that plays a role of the pressure-sensitive adhesive/adhesive, the pressure-sensitive adhesive/adhesive force, the environment in which the pressure-sensitive adhesive/adhesive is used, etc. In one embodiment, the pressure-sensitive adhesive/adhesive layer may have a thickness of 0.01 to 50 µm, preferably 0.05 to 20 µm, and more preferably 0.1 to 10 µm, in order to secure sufficient pressure-sensitive adhesive/adhesive force and minimize the thickness of the light control laminate.

The ultraviolet-absorbing layer is not particularly limited as long as it is for preventing deterioration of the light control laminate due to ultraviolet rays, and for example, salicylic acid-based ultraviolet absorbers (phenyl salicylate, p-tert-butyl salicylate, etc.), benzophenone-based ultraviolet absorbers (2,4-dihydroxybenzophenone, 2,2'-dihydroxy-4,4'-dimethoxybenzophenone, etc.), benzotriazole-based ultraviolet absorbers (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimidemethyl)-5'-methylphenyl)benzotriazole, 2,2-methylenebis(4-(1,1,3,3-tetramethylbutyl)-6-(2H-benzotriazol-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxycarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazol-2-yl)-6-(linear and branched dodecyl)-4-methylphenol, a mixture or the like of octyl-3-[3-tert-butyl-4-hydroxy-5-(chloro-2H-benzotriazol-2-yl)phenyl]propionate and 2-ethylhexyl-3-[3-tert-butyl-4-hydroxy-5-(5-chloro-2H-benzotriazol-2-yl)phenyl]propionate, cyanoacrylate-based ultraviolet absorbers (2'-ethylhexyl-2-cyano-3,3-diphenylacrylate, ethyl-2-cyano-3-(3',4'-methylenedioxyphenyl)-acrylate, etc.), triazine-based ultraviolet absorbers, etc., may be used, and benzotriazole-based ultraviolet absorbers or triazine-based ultraviolet absorbers that have high transparency and are excellent in preventing deterioration of polarizing plates or transmittance variable layers are preferred, and benzotriazole-based ultraviolet absorbers having more appropriate spectral absorption spectra are particularly preferred. The benzotriazole-based ultraviolet absorbers may be bis-based, and may be, for example, 6,6'-methylenebis(2-(2H-benzo[d][1,2,3]triazol-2-yl)-4-(2,4,4-trimethylpentan-2-yl)phenol), 6,6'-methylenebis(2-(2H-benzo[d][1,2,3]triazol-2-yl)-4-(2-hydroxyethyl)phenol), etc.

The hard coating layer is not particularly limited as long as it is for protecting a member such as a polarizing plate, a variable transmittance layer, etc. from external physical or chemical impacts, and a hard coating layer that has been developed in the past and will be developed later may be used.

In one embodiment, the hard coating layer may be formed by applying a hard coating layer forming composition on another member and then curing it with light or heat. The hard coating layer forming composition is not particularly limited, and may include, for example, a photocurable compound and a photoinitiator.

The photocurable compound and photoinitiator may be used without limitation as those commonly used in the art, the photocurable compound may be, for example, a photopolymerizable monomer, a photopolymerizable oligomer, etc., and examples of the photocurable compound may include monofunctional and/or polyfunctional (meth)acrylates, and examples of the photoinitiator may include hydroxycyclohexyl phenyl ketone, trimethylbenzoyl diphenylphosphine oxide, an acetophenone-based photoinitiator, an oxime ester-based photoinitiator, etc., and the photoinitiator may include Irgacure-184, TPO, Irgacure-907, etc. as commercially available products.

The method for manufacturing the light control laminate of the present disclosure is not particularly limited, and the light control laminate may also be manufactured by forming a first transparent conductive layer on a first polarizing plate, a rubbing process or an alignment film forming process, and a process of forming a liquid crystal layer, and forming a second transparent conductive layer on a second polarizing plate, a rubbing process, or forming an alignment film, thereby bonding it to a liquid crystal layer through a roll-to-roll process.

### <Smart Window, Automobile and Building Window>

The present disclosure includes a smart window including the light control laminate in addition to the light control laminate. The light control laminate of the present disclosure is applied to the smart window so that it may be easy to handle in the process, thereby preventing damage and defects.

In addition, the present disclosure includes an automobile in which the smart window is applied to at least one of a front window, a rear window, a side window, a sunroof window, and an internal partition, and a building window including the smart window.

Hereinafter, embodiments of the present disclosure will be specifically described. However, the present disclosure is not limited to the embodiments disclosed below, but can be implemented in various different forms, and these embodiments are provided only to make the disclosure of the present disclosure complete and to fully inform those skilled in the art to which the present disclosure pertains of the scope of the invention, and the present disclosure is defined only by the scope of the claims.

### Preparation Example 1: Preparing Polarizing Plate

### (1) Swelling Treatment Process

A polyvinyl alcohol film (fabric film) having a thickness of 60 µm (manufactured by Kuraray Co., Ltd., trade name "Kuraray Poval Film VF-PE#6000", average degree of polymerization 2400, degree of saponification 99.9 mol%) was returned while it was being continuously unwound from a fabric roll, and immersed in a swelling bath containing pure water at 20°C for 30 seconds. In this swelling treatment process, a difference in peripheral speed was applied between the nip rolls to perform stretching between rolls (longitudinal uniaxial stretching). The stretch ratio based on the fabric film was set to 2.5 times.

### (2) Dyeing treatment process

Subsequently, the film that passed through the nip rolls was immersed in a dyeing bath at 30°C having a mass ratio of pure water/potassium iodide/iodine/boric acid of 100/2/0.01/0.3 for 120 seconds. In this dyeing treatment, a difference in the peripheral speed was applied between the nip rolls to perform stretching between rolls (longitudinal uniaxial stretching). The stretch ratio based on the film after the swelling treatment process was set to 1.1 times.

### (3) Crosslinking treatment process

Subsequently, the film that passed through the nip rolls was immersed in a first crosslinking bath at 56°C having a mass ratio of pure water/potassium iodide/boric acid of 100/12/4 for 70 seconds. A difference in the peripheral speed was applied between the nip roll and the nip roll provided between the first crosslinking bath and the second crosslinking bath to perform stretching between rolls (longitudinal uniaxial stretching). The stretch ratio based on the film after the dyeing treatment process was set to 1.9 times.

### (4) Color complementing treatment process

Subsequently, the film after the crosslinking treatment process was immersed in a second crosslinking bath at 40°C having a mass ratio of potassium iodide/boric acid/pure water of 9/2.9/100 for 10 seconds.

### (5) Cleaning treatment process

Subsequently, the film after the second crosslinking treatment was immersed in a cleaning bath containing pure water at 14°C for 5 seconds, and cleaned at a shower volume of 5 m³/h and a shower temperature of 14°C.

### (6) Drying treatment process

Subsequently, the film after the cleaning treatment process was passed through a drying furnace, and heated and dried at 80°C for 190 seconds to manufacture a polarizer film. The moisture ratio after drying was 13.6%, and the thickness of the obtained polarizer film was approximately 18 µm.

### (7) Bonding treatment process

Subsequently, as an adhesive, an aqueous adhesive containing 5 parts by mass of polyvinyl alcohol with respect to 100 parts by mass of water was prepared. Thereafter, a protective film was laminated on both surfaces of the polarizer film using the prepared UV adhesive. UV light exposure was performed on the obtained laminate, and the adhesive was cured to prepare a first polarizing plate and a second polarizing plate, respectively.

### Preparation Example 2: Preparing Transparent Conductive Layer

The first polarizing plate and the second polarizing plate were coated with PEDOT·PSS (manufacturer: Daeha Mantech Co., Ltd., model number: TEA-150) to have a certain thickness using a 1-inch wire bar coater (manufacturer: Kipae E&T Co., Ltd., model number: #24), and dried at 80°C for 5 minutes to form a first transparent conductive layer and a second transparent conductive layer to a thickness of about 200 nm, respectively. The first and second polarizing plates on which the first transparent conductive layer and the second transparent conductive layer were formed were fixed to a vacuum plate set up in a rubbing machine respectively so as not to move in order to rub in the same direction as the polarizer absorption axis, and physical orientation was performed using a rubbing cloth (material: rayon) under the conditions of a speed of 10 mm/s, a depth of 0.3 mm, an RPM of 1000 times/min, and a count of 2 times.

### Preparation Example 3: Preparing Liquid crystal layer-forming composition

### Preparation Example 3-1

2 g of TN liquid crystal (manufacturer: Silichem Co., Ltd., model name: WH-S811) and 0.5 g of HDI isocyanurate trimer (manufacturer: Vencorex Tolonate, model name: HDT-LV2), a trifunctional isocyanate-based monomer, were mixed and stirred for 30 minutes to prepare a liquid crystal layer-forming composition.

### Preparation Example 3-2

A liquid crystal layer-forming composition was prepared in the same manner as in Preparation Example 3-1 except that 0.5 g of trimethylolpropane tris(2-methyl-1-aziridine propionate (manufacturer: Doorichem Co., Ltd., HD-100), a trifunctional aziridine-based monomer, was used instead of the trifunctional isocyanate-based monomer.

### Preparation Example 3-3

A liquid crystal layer-forming composition was prepared by further including 0.01 g of DBTDL (manufacturer: Sigma-Aldrich) as a catalyst for curing the trifunctional isocyanate-based monomer in Preparation Example 3-1.

### Preparation Example 3-4

2 g of TN liquid crystal (manufacturer: Silichem Co., Ltd., model name: WH-S811), 0.4 g of HDI isocyanurate trimer (manufacturer: Vencorex Tolonate, model name: HDT-LV2), a trifunctional isocyanate-based monomer, and 0.1 g of PETA (pentaerythritol triacrylate; manufacturer: Miwon Specialty Chemical Co., Ltd., model name: Miramer M340), a trifunctional acrylic monomer, were mixed. A liquid crystal layer-forming composition was prepared by further mixing 0.008 g of DBTDL (manufacturer: Sigma-Aldrich) as a catalyst for curing the trifunctional isocyanate-based monomer, and 0.001 g of CP-4 (manufacturer: Miwon Specialty Chemical Co., Ltd., Grade: Micure CP-4) and 0.001 g of TPO (manufacturer: Miwon Specialty Chemical Co., Ltd., Micure TPO) as a photoinitiator for UV curing of the trifunctional acrylic monomer and performing stirring for 30 minutes.

### Preparation Example 3-5

A liquid crystal layer-forming composition was prepared in the same manner as in Preparation Example 3-4 except that 0.1 g of HEA (2-hydroxyethyl acrylate; Sigma-Aldrich), a monofunctional acrylic monomer, was used instead of the trifunctional acrylic monomer.

### Preparation Example 3-6

A liquid crystal layer-forming composition was prepared in the same manner as in Preparation Example 3-4 except that 0.4 g of trimethylolpropane tris(2-methyl-1-aziridine propionate (manufacturer: Doorichem Co., Ltd., HD-100), a trifunctional aziridine-based monomer, was used instead of the trifunctional isocyanate-based monomer.

### Preparation Example 3-7

A liquid crystal layer-forming composition was prepared in the same manner as in Preparation Example 3-5 except that 0.4 g of trimethylolpropane tris(2-methyl-1-aziridine propionate (manufacturer: Doorichem Co., Ltd., HD-100), a trifunctional aziridine-based monomer, was used instead of the trifunctional isocyanate-based monomer.

### Preparation Example 3-8

A liquid crystal layer-forming composition was prepared in the same manner as in Preparation Example 3-4 except that 0.5 g of HEA (2-hydroxyethyl acrylate; Sigma-Aldrich), the monofunctional acrylic monomer, was used without using the trifunctional isocyanate-based monomer and catalyst.

### Preparation Example 3-9

A liquid crystal layer-forming composition was prepared in the same manner as in Preparation Example 3-4 except that 0.5 g of PETA (pentaerythritol triacrylate; manufacturer: Miwon Specialty Chemical Co., Ltd., model name: Miramer M340), a trifunctional acrylic monomer, was used without using the trifunctional isocyanate-based monomer and catalyst.

### Preparation Example 3-10

A liquid crystal layer-forming composition was prepared in the same manner as in Preparation Example 3-3 except that 0.8 g of the trifunctional isocyanate-based monomer was used.

### Preparation Example 3-11

A liquid crystal layer-forming composition was prepared in the same manner as in Preparation Example 3-3 except that 0.9 g of the trifunctional isocyanate-based monomer was used.

### Preparation Example 3-12

A liquid crystal layer-forming composition was prepared in the same manner as in Preparation Example 3-1 except that IPDI (Isophorone diisocyanate; Sigma-Aldrich) was used instead of the trifunctional isocyanate-based monomer.

### Preparation Example 3-13

A liquid crystal layer-forming composition was prepared in the same manner as in Preparation Example 3-1 except that HDI (hexamethylene diisocyanate; Sigma-Aldrich) was used instead of the trifunctional isocyanate-based monomer.

### Preparation Example 3-14

A liquid crystal layer-forming composition was prepared using only TN liquid crystal (manufacturer: Silichem Co., Ltd., model name: WH-S811).

### Examples and Comparative Examples: Manufacturing Light Control Laminate

The first transparent conductive layer on the first polarizing plate prepared in Preparation Example 1 and Preparation Example 2 was coated with the liquid crystal layer-forming composition of Preparation Example 3 using a 3/4-inch wire bar coater (manufacturer: Kipae E&T Co., Ltd., model number: #4) to have a cell gap of 5 µm.

When the coating was completed, the absorption axis of the second polarizing plate prepared in Preparation Example 1 and Preparation Example 2 on which the second transparent conductive layer was formed was rotated to form 90° to the absorption axis of the first polarizing plate, and the rubbing-aligned surface of the second transparent conductive layer was bonded so that it was in contact with the liquid crystal layer.

The bonding-completed cells were treated in an autoclave at 60°C and 6 bar for 30 minutes to uniformly implement a cell gap of 5 µm, thereby manufacturing a light control laminate.

### Experimental Example: Evaluation of physical properties

### (1) Normal White Evaluation

For the light control laminates manufactured in Examples and Comparative Examples, the normal white state was observed with a naked eye without voltage being applied, and the evaluation was conducted using the evaluation criteria below, and the results are shown in Table 1 below.

### <Evaluation Criteria>

∘: No stains
: 3 or fewer stains
×: 4 or more stains, multiple
**(2) Cell Drivability Evaluation**

For the light control laminates manufactured in Examples and Comparative Examples, the driving state was evaluated using the evaluation criteria below when the two electrodes of the voltage application device (manufacturer: GWinstek, model name: APS-7050E) were connected to the electrode surfaces of the first polarizing plate and the second polarizing plate, respectively, and a voltage of 20 V was applied, and the results are shown in Table 1 below.

### <Evaluation Criteria>

∘: Operable and no stains
△: Operable and 3 or fewer stains
×: Not operable and 4 or more stains

### (3) Evaluation of Adhesion

The light control laminates manufactured in Examples and Comparative Examples were cut to a size of 25*150 mm using a super cutter and attached to glass using a double-sided tape.

The 180° peeling power of the first and second polarizing plates of the relevant sample was measured using an autograph (manufacturer: SHIMADZU, model number: AG-IS), and the results are shown in Table 1 below.

**[Table 1]**

| Classification | Liquid crystal layer-forming composition | | | | | | Evaluation of physical properties | | |
|---|---|---|---|---|---|---|---|---|---|
| | Preparation Example | Liquid crystal compound (g) | Polymerizable monomer | | UV initiator (g) | Catalyst (g) | Normal white | Cell drivabilit y | Adhesion (gf/50 mm) |
| | | | Type | Content (g) | | | | | |
| Example 1 | Preparation Example 3-1 | 2 | trifunctional HDI | 0.5 | - | - | O | O | 61.2 |
| Example 2 | Preparation Example 3-2 | 2 | trifunctional aziridine | 0.5 | - | - | O | O | 40.8 |
| Example 3 | Preparation Example 3-3 | 2 | trifunctional HDI | 0.5 | - | 0.01 | O | O | 57.7 |
| Example 4 | Preparation Example 3-4 | 2 | trifunctional HDI | 0.4 | CP-4 0.001 | 0.008 | O | O | 20.4 |
| | | | PETA | 0.1 | TPO 0.001 | | | | |
| Example 5 | Preparation Example 3-5 | 2 | trifunctional HDI | 0.4 | CP-4 0.001 | 0.008 | O | O | 42.5 |
| | | | HEA | 0.1 | TPO 0.001 | | | | |
| Example 6 | Preparation Example 3-6 | 2 | trifunctional aziridine | 0.4 | CP-4 0.001 | 0.008 | O | O | 33.7 |
| | | | PETA | 0.1 | TPO 0.001 | | | | |
| Example 7 | Preparation Example 3-7 | 2 | trifunctional aziridine | 0.4 | CP-4 0.001 | 0.008 | O | O | 38.1 |
| | | | HEA | 0.1 | TPO 0.001 | | | | |
| Example 8 | Preparation Example 3-8 | 2 | HEA | 0.5 | CP-4 0.005 | - | Δ | O | 30.6 |
| | | | | | TPO 0.005 | | | | |
| Example 9 | Preparation Example 3-9 | 2 | PETA | 0.5 | CP-4 0.005 | - | O | O | 10.2 |
| | | | | | TPO 0.005 | | | | |
| Example 10 | Preparation Example 3-10 | 2 | trifunctional HDI | 0.8 | - | 0.016 | O | △ | 102.0 |
| Example 11 | Preparation Example 3-11 | 2 | trifunctional HDI | 0.9 | | 0.018 | △ | △ | 112.2 |
| Comparative Example 1 | Preparation Example 3-12 | 2 | IPDI | 0.5 | | | △ | △ | 2.0 |
| Comparative Example 2 | Preparation Example 3-13 | 2 | HDI | 0.5 | | | X | X | 4.1 |
| Comparative Example 3 | Preparation Example 3-14 | 2.5 | - | - | - | - | O | △ | 0.0 |

- Liquid crystal compound: Silichem Co., Ltd., Grade: WH-S811
- Trifunctional HDI: HDI isocyanurate trimer (Manufacturer Vencorex, Tolonate HDT-LV2)
- Trifunctional aziridine: trimethylolpropane tris(2-methyl-1-aziridine propionate (Manufacturer Doorichem Co., Ltd., HD-100)
- HEA: 2-Hydroxyethyl acrylate (Manufacturer Sigma-Aldrich, Reagent)
- PETA: Pentaerythritol triacrylate (Manufacturer Miwon Specialty Chemical Co., Ltd., Miramer M340)
- IPDI: Isophorone diisocyanate (Manufacturer Sigma-Aldrich, Reagent)
- HDI: Hexamethylene diisocyanate (Manufacturer Sigma-Aldrich, Reagent)
- DBTDL: Dibutyltin dilaurate (Manufacturer Sigma-Aldrich, Reagent)
- CP-4: Hydroxycyclohexyl phenyl ketone (manufacturer Miwon Specialty Chemical Co., Ltd., Micure CP-4)
- TPO: Trimethylbenzoyl diphenylphosphine oxide (manufacturer Miwon Specialty Chemical Co., Ltd., Micure TPO)

Referring to the above experimental results, it can be confirmed that when the liquid crystal layer contains one or more selected from a trifunctional aziridine-based monomer, a trifunctional isocyanate-based monomer, and an acrylate-based monomer as a polymerizable monomer, the adhesion is very excellent while there is no problem in operation while preventing the field of view from being obstructed by the polymerizable monomer.

In relation to this, it can be seen that Comparative Examples 1 and 2 including a bifunctional monomer as a polymerizable monomer in the liquid crystal layer have reduced normal white and cell operation, and the very low adhesion, and it can be confirmed that in the case of Comparative Example 3 that does not include the polymerizable monomer of the present disclosure, there is no room for the formation of a polymer network in the liquid crystal layer, so there is no decrease in normal white, but there is no adhesion at all.

## Claims

1. A light control laminate comprising:
a first polarizing plate;
a first transparent conductive layer formed on one surface of the first polarizing plate;
a second polarizing plate facing the first polarizing plate;
a second transparent conductive layer which is formed on one surface of the second polarizing plate and faces the first transparent conductive layer; and
a liquid crystal layer provided between the first transparent conductive layer and the second transparent conductive layer,
wherein the first transparent conductive layer and the second transparent conductive layer contain a conductive polymer, the liquid crystal layer is a cured product of a liquid crystal layer-forming composition comprising a polymerizable monomer and a liquid crystal compound, wherein the polymerizable monomer includes one or more selected from a trifunctional aziridine-based monomer, a trifunctional isocyanate-based monomer, and an acrylate-based monomer, and the liquid crystal compound is arranged with a uniform initial orientation.

2. The light control laminate of claim 1, wherein the polymerizable monomer includes one or more selected from a trifunctional aziridine-based monomer and a trifunctional isocyanate-based monomer, and an acrylate-based monomer.

3. The light control laminate of claim 1 or 2, wherein the polymerizable monomer is contained in an amount of 40% by weight or less with respect to the weight of the liquid crystal compound.

4. The light control laminate of one of claims 1 to 3, wherein the liquid crystal behavior method of the liquid crystal layer is one selected from the group consisting of a twisted nematic (TN) mode, a super twisted nematic (STN) mode, an in-plane switching (IPS) mode, a fringe-field switching (FFS) mode, an electrically controlled birefringence (ECB) mode, and a vertical alignment (VA) mode.

5. The light control laminate of one of claims 1 to 4, wherein the first transparent conductive layer and the second transparent conductive layer are ones in which a surface in contact with the liquid crystal layer is rubbing-aligned.

6. The light control laminate of one of claims 1 to 5, wherein at least one of the first transparent conductive layer and the second transparent conductive layer is formed in direct contact without including a separate substrate between the at least one transparent conductive layer and one of the first polarizing plate and the second polarizing plate.

7. The light control laminate of one of claims 1 to 6, wherein at least one of the first transparent conductive layer and the second transparent conductive layer is formed in direct contact by including a highly adhesive layer between the at least one transparent conductive layer and one of the first polarizing plate and the second polarizing plate.

8. A smart window comprising the light control laminate of any one of claims 1 to 7.
